# FASCICULE DE BREVET EUROPEEN

(11) **EP 3 672 739 B1**
(45) Date de publication et mention de la délivrance du brevet: **25.02.2026**
(21) Numéro de dépôt: 18780174.1
(22) Date de dépôt: 21.08.2018
(51) Int. Cl.: B09B 3/00, A62D 101/41

(54) **PROCÉDÉ DE DESTRUCTION ET DE VALORISATION DE DÉCHETS AMIANTÉS**
VERFAHREN ZUR ENTSORGUNG UND VERWERTUNG VON ASBESTABFÄLLE
PROCESS FOR DESTRUCTION AND RECOVERING OF WASTE CONTAINING ASBESTOS

(30) Priorité: 24.08.2017 FR 1757840
(43) Date de publication de la demande: 01.07.2020
(73) Titulaire: Université de Montpellier, 34090 Montpellier (FR); Centre National de la Recherche Scientifique, 75016 Paris (FR); Ecole Nationale Supérieure de Chimie de Montpellier, 34296 Montpellier (FR)
(72) Inventeur: TALBI, Gaël, 34000 Montpellier (FR); CAMBON, Olivier, 34400 Villetelle (FR); CAMBON, Martine, 34400 Villetelle (FR)
(74) Mandataire: Germain Maureau
(86) Numéro de dépôt international: PCT/FR2018/052086
(87) Numéro de publication internationale: WO 2019/038502

(56) Documents cités:
- WO-A1-88/10234
- FR-A1- 2 930 736
- US-A- 4 401 636
- US-B1- 6 391 271

## Description

L'invention concerne un procédé de destruction et de valorisation des déchets amiantés.

L'amiante (ou autrement dit « asbestos ») est une famille de matériaux minéraux fibreux qui se décompose en les deux groupes minéralogiques suivants : le groupe des serpentines et le groupe des amphiboles. Ces deux groupes minéralogiques d'amiante présentent des structures et des natures chimiques différentes.

La serpentine contient une seule variété d'amiante qui est le chrysotile (aussi connu sous la dénomination « d'amiante blanc »). C'est pourquoi, dans la présente demande, on emploiera le terme de « chrysotile » pour désigner le groupe d'amiante de la serpentine. Le chrysotile recouvre les trois espèces minérales polytypes suivantes :
- le clinochrysotile,
- l'orthochrysotile, et
- le parachrysotile.

La formule chimique du chrysotile est : 3 MgO.2SiO₂. Il comprend deux couches d'oxydes :
- la 1^{ière} couche est composée de tétraèdres de SiO₄, et
- la 2^{ième} couche est composée d'octaèdres de MgO₆.

Du fait de la différence de taille entre MgO₆ et SiO₄, la couche de MgO₆ induit une flexion de la structure qui conduit à ce que le chrysotile présente une structure en tubes dont la couche de MgO₆ est la couche externe.

Le chrysotile représente environ 94% du marché mondial de l'amiante.

Le groupe des amphiboles est composé des 5 variétés d'amiante suivantes :
- amosite (aussi connu sous la dénomination « d'amiante brun ») ;
- crocidolite (aussi connu sous la dénomination « d'amiante bleu ») ;
- trémolite ;
- actinolite ; et
- anthophyllite.

Ces variétés d'amiante diffèrent l'une de l'autre de par leur composition chimique.

La structure des amphiboles est composée d'une série de chaînes doubles (Si₄O₁₁) parallèle à l'axe c. Les couches de MO₆ (avec M choisi parmi Mg, Fe et Na) sont empilées entre des couches de SiO₂.

L'amiante est un matériau fibreux connu depuis plus de 2000 ans dont l'essor de la production a débuté en 1877 au Québec. Au cours du dernier siècle, des millions de tonnes de fibres d'amiante ont été extraites et ont été utilisées dans divers domaines tels que ceux des matériaux de construction et de textile. L'intérêt pour les fibres d'amiante reposait sur le fait qu'il s'agissait de minéraux qui présentaient des propriétés isolantes, ne brûlaient pas, résistaient aux agressions chimiques et avaient une résistance mécanique élevée à la traction. Ainsi, l'amiante a été :
- utilisé pour l'isolation thermique des tuyaux, pour le calorifugeage,
- incorporé dans des compositions de matériaux composites tels que les fibrociments (pour la fabrication de tuyaux ou de plaques), les liants (par exemple des colles et des peintures), les fibropolymères (par exemple pour la fabrication de gaines électriques).

L'application de l'amiante la plus commune résidait dans son incorporation dans des compositions de ciment en vue de l'obtention de fibrociment (aussi connu sous la dénomination d'«amiante-ciment » ou « ciment-amiante »). Il s'agit d'un matériau constitué d'un complexe de fibres d'amiante dispersées dans un liant hydraulique qui est du ciment. Il a servi à produire de nombreux produits tels que plaques, dalles, murs antibruit, tôle ondulées, tuiles, tuyaux servant au drainage pluvial, tuyaux d'évacuation de conduits de cheminées, évents. Cette utilisation représentait 95% des usages de l'amiante.

Cependant, il est connu que l'amiante est un matériau nocif. Depuis les années 1980-1990, son utilisation est interdite dans de nombreux pays. En effet, les particules microscopiques d'amiante peuvent atteindre les alvéoles pulmonaires. L'inhalation de ces particules est dangereuse et est la cause de nombreux cas de cancers. A titre d'exemple, l'amiante a été utilisé abondamment en France jusqu'à son interdiction en 1997 du fait de ses effets néfastes sur la santé humaine.

C'est pourquoi, le désamiantage, ainsi que le traitement des déchets d'amiante sont devenus des enjeux sociétaux importants. La recherche de nouveaux moyens de traitement est urgente afin d'éviter tout risque d'exposition.

En outre, eu égard aux tonnes de déchets d'amiante qui vont être générées, il est essentiel de disposer de solutions efficaces de traitement afin de rendre ces déchets inertes et de les transformer avec des procédés économiques et applicables à l'échelle industrielle.

Les traitements des déchets amiantés connus à ce jour sont des procédés de vitrification ou d'enfouissement.

Le procédé d'enfouissement est une technique de stockage des déchets consistant à les mettre en quarantaine pour éviter leur propagation. Cela ne les élimine pas et ne permet pas leur valorisation de manière industrielle. Cette solution ne résout pas le problème de la dangerosité des amiantes ainsi enfouis. De plus, le manque de sites d'enfouissement devient critique.

La vitrification, notamment à la torche à plasma, détruit totalement les fibres d'amiante de manière à obtenir un vitrifiat, c'est-à-dire un matériau inerte de verre, réutilisable par exemple, dans le domaine de la construction ou de la voirie (remblais pour les routes). Cette solution de traitement présente les inconvénients d'être énergivore et de nécessiter une installation spécifique, onéreuse et devant résister à des températures de l'ordre de 1000°C à 1400°C. En outre, cette installation requiert des mesures de sécurité très élevées pour ses utilisateurs. Enfin, la vitrification est source de pollutions.

Par ailleurs, il existe un procédé par traitement biologique des déchets d'amiante qui est actuellement en cours d'étude. Ce procédé n'est pas encore parfaitement au point et ne permet pas de détruire totalement les amiantes.

Ainsi, on relève de l'état de l'art que les solutions de traitement et de destruction des déchets amiantés ne sont pas pleinement satisfaisantes.

A titre d'exemple, le document FR 2930736 A1 décrit un procédé de traitement d'un déchet comprenant de l'amiante, mettant en œuvre une étape de traitement du déchet dans une solution acide à une température supérieure à 125°C puis, après introduction d'ions phosphate et calcium, une étape de traitement dans une solution basique.

Le document WO 88/10234 A1 divulgue un procédé de destruction d'un déchet amianté par traitement avec une solution acide à une température pouvant atteindre 320°C, de préférence d'au plus 100°C.

Le document US 4401636 A décrit un procédé pour réduire le caractère irritant de l'amiante par un traitement dans un système acide faible - base forte à une température de 20-100°C.

Le document US 6391271 B1 rapporte un procédé de traitement d'un déchet amianté par une solution basique dans un réacteur pouvant être effectué sur le site où se trouve le déchet.

La présente invention se propose de pallier les déficiences des procédés de traitement des déchets amiantés connus de l'état de l'art en proposant un procédé de destruction et de valorisation desdits déchets qui soit écologique, économique, rapide et parfaitement applicable à l'échelle industrielle.

Les inventeurs de la présente invention ont en effet mis au point un procédé de destruction et de valorisation des déchets amiantés qui, après au moins une étape de traitement, comprend une étape de valorisation permettant de valoriser d'une ou plusieurs façons différentes les produits obtenus à l'issue de l'étape de traitement. Les inventeurs proposent une solution très performante et économique pour utiliser les déchets amiantés, et ce à la manière d'un cercle vertueux.

Dans le cadre de la présente invention, on entend par « déchet amianté » un déchet qui peut être :
- un déchet homogène, à savoir un déchet qui contient le minéral pur d'amiante sans matériau supplémentaire dans sa structure. En d'autres termes, il s'agit de fibres d'amiante naturelles cristallisées
   ou
- un déchet hétérogène, à savoir un déchet qui contient de l'amiante et un autre composé (par exemple : ciment, gypse ou encore des fibres de silicates alcalino-terreux connues sous l'acronyme anglophone « AES » pour « Alkaline Earth Silicate »).

Le déchet amianté peut se présenter sous les formes suivantes :
- une forme libre ou autrement dit sous forme friable. Il s'agit par exemple des déchets de flocage ou de calorifugeage ;
- une forme liée ou autrement dit sous forme non-friable. Il s'agit notamment des déchets à base de fibrociment mentionnés ci-dessus.

L'invention a ainsi pour premier objet un procédé de destruction et de valorisation d'un déchet amianté qui se caractérise en ce qu'il comprend au moins les étapes suivantes :
a) on détermine le ou les groupes minéralogique(s) d'amiante que contient ledit déchet, ledit groupe étant choisi parmi le chrysotile et l'amphibole,
b) on effectue au moins un traitement sur ledit déchet amianté, ledit traitement étant :
   - un traitement acide lorsque le déchet amianté comprend uniquement du chrysotile, ledit traitement acide consistant en l'immersion du déchet amianté dans une solution d'acide fort, à une température d'au plus 100°C, de manière à obtenir une solution acide et un solide comprenant une silice mésoporeuse,
   - un traitement basique lorsque le déchet amianté comprend uniquement de l'amphibole, ledit traitement basique consistant en l'immersion du déchet amianté dans une solution d'une base forte dans un milieu fermé hermétiquement de manière à obtenir une solution basique contenant de la silice dissoute,
   - ledit traitement acide suivi dudit traitement basique lorsque le déchet amianté comprend un mélange de chrysotile et d'amphibole, de manière à obtenir après ledit traitement acide une solution acide et un mélange solide contenant une silice mésoporeuse et l'amphibole non altérée, ledit mélange solide étant séparé de la solution acide pour être soumis audit traitement basique de manière à obtenir une solution basique contenant de la silice dissoute,
c) on valorise au moins un des produits obtenus à l'issue de l'étape b) de traitement.

Le procédé de valorisation selon l'invention présente l'avantage de détruire et de valoriser de manière parfaitement efficace le déchet amianté, étant donné que le traitement est adapté en fonction du résultat de la détermination du ou des groupes minéralogiques d'amiante que contient ledit déchet.

En outre, le procédé selon l'invention résout le problème de la dangerosité des déchets d'amiante du fait qu'il les détruit au cours de l'étape de traitement.

Enfin, la valorisation du déchet amianté est optimale. A l'issue du procédé de destruction et de valorisation, le déchet a été transformé en un ou plusieurs produits qui présentent une valeur ajoutée d'un point de vue industriel et économique et qui sont utilisables dans de nombreuses applications détaillées ci-après.

En effet, l'étape c) peut consister en l'une des valorisations suivantes prise isolément ou en toute combinaison de celles-ci :
- utiliser la silice mésoporeuse obtenue à l'issue du traitement acide pour le piégeage et la filtration de molécules ;
- utiliser la silice mésoporeuse obtenue à l'issue du traitement acide en tant que précurseur de silicium pour la synthèse d'une zéolithe ;
- extraire ou isoler de manière sélective des ions présents dans la solution acide obtenue à l'issue du traitement acide ;
- utiliser la solution basique obtenue à l'issue du traitement basique pour la fabrication d'un matériau de type silicate de calcium hydraté ;
- utiliser la solution basique obtenue à l'issue du traitement basique pour la synthèse d'une zéolite.

Dans un mode de réalisation de l'invention, le déchet amianté est un déchet cimentaire amianté (ou autrement dit un déchet de fibrociment) ou un flocage amianté à base de gypse. En effet, comme cela a été rappelé ci-dessus, l'incorporation d'amiante dans les compositions de ciment représentaient 95% des usages de l'amiante. Ainsi, des tonnes de déchets cimentaires amiantés sont à traiter. L'invention est parfaitement appropriée pour résoudre le problème de la destruction des déchets amiantés cimentaires, et ce de manière efficace, écologique, économique et à l'échelle industrielle.

A l'étape a) du procédé, la détermination du ou des groupes minéralogique(s) que contient le déchet amianté peut être réalisée par toute technique parfaitement à la portée de l'homme du métier. Par exemple, il peut s'agir de la technique de la diffractométrie par rayons X, la microscopie électronique à balayage et la spectroscopie infrarouge à transformée de Fourier.

L'étape b) du procédé selon l'invention permet la destruction du déchet amianté.

A l'étape b), lorsqu'un traitement acide est effectué, la structure du chrysotile est détruite par dissolution de la couche de brucite de formule Mg(OH)₂ qu'il contient. On obtient une silice mésoporeuse. Cela signifie que cette silice comprend des nanotubes de silice amorphe (à savoir non cristallisée). A l'issue du traitement acide, la structure fibreuse du chrysotile n'est pas éliminée. Les fibres obtenues après traitement acide sont des fibres (ou autrement dit des nanotubes) de silice amorphe.

Avantageusement, la solution acide contient au moins un acide fort.

De préférence, elle contient au moins un monoacide fort. Par exemple, le monoacide peut être choisi parmi l'acide nitrique (HNO₃) et l'acide chlorhydrique (HCl). De préférence, il s'agit de l'acide nitrique. Ces monoacides forts sont particulièrement appropriés du fait que les ions issus de la destruction des déchets ne précipiteront pas avec les ions nitrates (NO₃⁻) et chlorure (Cl⁻) apportés par l'acide (les ions issus de la destruction des déchets resteront en solution). En outre, ils ne sont pas onéreux et sont faciles à manipuler conformément aux dispositions de sécurité.

Dans un autre mode de réalisation de l'invention, la solution acide peut contenir de l'acide sulfurique ou de l'acide phosphorique. Cependant, ces acides seront à éviter si le déchet amianté est un déchet cimentaire amianté. En effet, le déchet cimentaire contient du calcium et du magnésium qui peuvent précipiter sous la forme de CaSO₄ et MgSO₄ si la solution acide contient de l'acide sulfurique ou de phosphate de calcium et de magnésium si la solution contient de l'acide phosphorique.

Dans un autre mode de réalisation, une solution acide contenant des ions fluorure (F⁻) peut également être utilisée conduisant à la destruction de la matrice cimentaire et de l'amiante quelle que soit sa nature. Cependant, il peut être déconseillé d'utiliser ce type d'acide pour des raisons évidentes de sécurité connues de l'homme de métier.

C'est pourquoi, lorsque le déchet est un déchet cimentaire amianté, lors du traitement acide, il est préférable que la solution soit une solution d'acide chlorhydrique ou d'acide nitrique. Au cours de ce traitement acide, la matrice cimentaire est dissoute.

La concentration en acide de la solution d'acide est avantageusement comprise entre 2 mol/L et 11 mol/L, de préférence elle est inférieure à 4 mol/L pour des raisons économiques.

Au cours du traitement acide, la température est comprise entre la température ambiante (c'est-à-dire environ 20°C) et 100°C, de préférence entre 50°C et 80°C.

Le traitement acide est ainsi réalisé dans des conditions douces, à savoir à une température peu élevée n'excédant pas 100°C et à pression atmosphérique.

Dans un mode de réalisation de l'invention, le traitement acide est réalisé en présence d'ultrasons. Cela présente l'avantage d'accélérer la cinétique de dissolution de la couche de brucite que contient le chrysotile et également d'abaisser la température de traitement acide (par exemple jusqu' à température ambiante), et ce en fonction de la cohésion initiale du déchet amianté à détruire et à valoriser.

La durée du traitement acide peut être comprise entre 2 heures et 10 jours, de préférence entre 2 heures et 4 jours.

En outre, durant le traitement acide, le gaz carbonique (CO₂) qui se dégage peut être piégé par barbotage dans une solution d'eau de chaux.

A l'étape b), un traitement basique est effectué lorsque le déchet amianté contient de l'amphibole. En effet, l'amphibole présente une structure dans laquelle les couches contenant du Mg et du Fe sont emprisonnées entre deux couches de silice qu'il est très difficile de détruire en milieu acide. Au cours du traitement basique, la silice est dissoute. On obtient ainsi une solution basique contenant de la silice dissoute.

La base forte peut être choisie parmi la soude (NaOH) et la potasse (KOH). De préférence, il s'agit de NaOH.

La concentration en base de la solution basique est avantageusement comprise entre 2 mol/L et 15 mol/L, de préférence entre 6 mol/L et 15 mol/L, plus préférentiellement entre 7 mol/L et 15 mol/L, encore plus préférentiellement 7 mol/L et 10 mol/L.

Au cours du traitement basique, la température est comprise entre 100°C et 250°C, de préférence entre 150°C et 200°C.

La durée du traitement basique peut être comprise entre 2 heures et 10 jours, de préférence elle est inférieure à 5 jours.

Avantageusement, le traitement basique est réalisé dans un autoclave, par exemple un autoclave revêtu de polytétrafluoroéthylène, ou dans autre dispositif fermé permettant de mettre en œuvre les conditions décrites ci-dessus.

Ainsi, le traitement basique est réalisé dans des conditions hydrothermales. Par « conditions hydrothermales », on entend dans le cadre de la présente demande que le traitement basique est réalisé dans une enceinte fermée dans des conditions sub-critiques permettant d'atteindre des températures supérieures au point d'ébullition de la solution basique qui serait obtenu en enceinte ouverte (c'est-à-dire des conditions normales de pression atmosphérique).

Lorsque le déchet amianté comprend un mélange de chrysotile et d'amphibole, au cours du traitement acide, la structure du chrysotile est détruite mais il demeure de l'amphibole qui n'est pas détruite en milieu acide pour les raisons expliquées ci-dessus. C'est pourquoi, dans ce mode de réalisation de l'invention, le déchet amianté est soumis à un traitement consistant en le traitement acide suivi du traitement basique tels qu'ils ont été décrits ci-dessus. On obtient à l'issue du traitement basique une solution basique contenant de la silice dissoute.

A l'issue du traitement acide, la silice mésoporeuse et l'amphibole (à savoir l'amphibole non altérée) qui sont présentes sous forme solide dans la solution acide peuvent être récupérées par toute technique à la portée de l'homme du métier, par exemple la filtration. Le traitement basique est alors effectué sur le mélange solide contenant cette silice mésoporeuse et cette amphibole ainsi recueillies. La silice mésoporeuse, ainsi que l'amphibole sont alors toutes deux dissoutes. On obtient ainsi une solution basique contenant de la silice dissoute.

L'étape b) de traitement qui a été détaillée ci-dessus selon que le déchet amianté comprend du chrysotile et/ou de l'amphibole présente les avantages de pouvoir être réalisée avec des composés chimiques très courants et peu onéreux (par exemple solution d'acide nitrique, d'acide chlorhydrique ou de soude). En outre, les conditions opératoires sont classiques dans le domaine de la chimie et donc parfaitement à la portée de l'homme du métier. De plus, de manière avantageuse, aucun sous-produit dangereux n'est généré.

Dans un mode de réalisation de l'invention, le traitement acide peut être suivi d'un traitement thermique de manière à obtenir une silice dont les parois des nanotubes sont amorphes ou cristallisées et non hydratées.

Le traitement thermique consiste en un chauffage à une température d'au moins 600°C de la silice mésoporeuse obtenue à l'issue du traitement acide.

A l'issue du traitement acide, la silice mésoporeuse présente dans la solution acide est un solide qui peut être récupéré par toute technique à la portée de l'homme du métier, par exemple par filtration. Ce solide obtenu à l'issue du traitement acide est une silice mésoporeuse hydratée. Par ailleurs, la solution acide pourra être également valorisée. Le traitement thermique est alors effectué sur cette silice mésoporeuse ainsi recueillie.

La température du traitement thermique est d'au moins 600°C de manière à ce que les nanotubes de silice soient totalement déshydratés. Si la température du traitement thermique est comprise entre 600 et 700°C, les parois des nanotubes restent amorphes. Au-delà d'une température de 700°C, les parois des nanotubes commencent à cristalliser pour atteindre une meilleure cristallinité à 800°C. C'est pourquoi, selon la température du traitement thermique à laquelle la silice mésoporeuse aura été soumise, on obtient une silice dont les parois des nanotubes sont non hydratées et qui peuvent être amorphes ou cristallisées. Ces deux formes de la structure des parois, à savoir amorphe et cristallisée, sont aussi intéressantes l'une que l'autre, car elles permettent d'utiliser la silice dans des applications différentes. Ainsi, la température du traitement thermique peut être adaptée en fonction de l'application envisagée de la silice ainsi obtenue.

La durée du traitement thermique peut être comprise entre 4 heures et 48 heures, de préférence entre 4 heures et 24 heures.

L'étape de traitement thermique peut être réalisée dans un four de traitement thermique classique qui est parfaitement à la portée de l'homme du métier, la silice mésoporeuse étant placée dans des creusets inertes thermiquement.

Au cours de l'étape de traitement thermique, il se produit une perte d'eau qui est liée à la structure siliceuse des nanotubes de la silice mésoporeuse. Cette perte d'eau s'accompagne d'un réarrangement progressif des tétraèdres de SiO₄ entre eux. Ce réarrangement provoque à une température supérieure à 700°C une cristallisation des parois des nanotubes et une perte de la porosité des parois des nanotubes par leur condensation. En d'autres termes, il y a réorganisation de la matière en température ; ce qui aboutit à la cristallisation des parois des nanotubes.

Ainsi, lors du traitement thermique, les parois des nanotubes de silice amorphe se reconstruisent en se condensant.

En effet, lors du traitement acide, les couches de brucite ont été éliminées ; ce qui a laissé des espaces très importants entre les feuillets de silice qui constituent la paroi des nanotubes. On a obtenu des nanotubes avec un diamètre d'environ 3,2 nm mais avec des parois très peu structurées et donc une surface spécifique importante (c'est-à-dire la surface développée par des feuillets non contigus) et un volume de pore important. Lorsqu'on réalise le traitement thermique, ces feuillets se reconnectent entre eux avec formation des tétraèdres de SiO₄ ; ce qui entraîne une diminution de la surface spécifique, le volume total diminue également mais le centre du tube (autrement dit le diamètre du tube) augmente.

A l'issue du traitement thermique, on obtient une silice dont les parois des nanotubes sont amorphes ou cristallisées et non hydratées. La taille des pores de cette silice est comprise entre 3 et 6 nm, de préférence comprise entre 3 et 4 nm pour une température de traitement thermique inférieure à 700°C, et entre 5 et 6 nm pour une température de traitement thermique supérieure à 700°C.

Les différentes manières de valoriser le ou les produits obtenus à l'issue de l'étape de traitement b) sont détaillées ci-dessous.

Une première valorisation concerne la silice mésoporeuse.

A l'étape c), la silice mésoporeuse obtenue à l'issue du traitement acide peut être utilisée en mettant à profit la présence des nanotubes de silice amorphe qu'elle comprend en y piégeant des molécules de tailles importantes (c'est-à-dire supérieures à 0,5 nm), par exemple des molécules biologiques (molécules polyatomiques telles que des anesthésiants, des drogues et autres antiseptiques). La silice mésoporeuse obtenue à l'issue du traitement acide peut trouver des applications dans le domaine médical pour purifier des liquides biologiques (le sang, par exemple).

Grâce aux nanotubes, la silice mésoporeuse peut également être utilisée en tant que moyen de filtration de molécules, notamment de molécules polluantes, soit dans le domaine de l'environnement soit dans le domaine médical (pesticides, urée, créatinine par exemple).

Il est également envisageable de valoriser la silice mésoporeuse obtenue à l'issue du traitement acide en l'utilisant en tant que précurseur de silicium pour la synthèse d'une zéolithe.

Ainsi, lorsqu'un traitement acide a été effectué, l'étape c) peut consister à utiliser la silice mésoporeuse pour le piégeage ou la filtration de molécules et/ou en tant que précurseur de silicium pour la synthèse d'une zéolithe.

Dans un mode de réalisation de l'invention dans lequel le déchet amianté contient du chrysotile et la solution d'acide est une solution d'acide nitrique, la silice mésoporeuse est utilisée pour synthétiser une zéolithe de type nitrate-cancrinite de formule Na₈[Al₆Si₆O₂₄](NO₃)₂-4H₂O.

La zéolithe ainsi obtenue présente une excellente pureté du produit synthétisé avec un très bon accord avec le modèle structural. La structure est composée de petites cages formant une hélice.

Cette zéolithe est particulièrement avantageuse pour ses propriétés d'adsorption notamment dans le domaine de la filtration d'ions polluants. En outre, les ions nitrates contenus dans la structure de cette zéolithe lui confèrent des propriétés particulières d'échange ionique dues à des propriétés structurales spécifiques (telles que la taille des cages pour échanger des ions) et des comportements thermo-élastiques (capacité de déformation du réseau) favorables à l'insertion de différents ions.

Ainsi, on valorise un déchet amianté contenant du chrysotile de manière à obtenir une zéolithe de type nitrate-cancrinite qui peut être utilisée dans de nombreuses applications grâce à ses propriétés d'adsorption.

Par exemple, cette zéolithe est utilisée dans le domaine de l'environnement où elle sert de piège à ions polluants comme le Pb, Cd, Sr et Hg.

La nitrate-cancrinite peut être synthétisée en mettant en œuvre ces étapes :
On dispose de précurseurs dont les quantités sont détaillées en pourcentages massiques exprimés par rapport à la masse totale desdits précurseurs :
- précurseur de silicium : entre 7,8 % et 8,2 % de la silice mésoporeuse obtenue à l'issue du traitement acide ;
- précurseur d'aluminium : entre 4,1 % et 4,5 % de Al₂O₃.Na₂O ;
- précurseur de nitrate de sodium : entre 76,0 % et 76,3 % de NaNO₃ ;
- entre 11,2 % et 11,6% d'hydroxyde de sodium : NaOH.

Dans un 1^{ier} bécher rempli de 35 mL d'eau distillée, on ajoute dans l'ordre suivant : la base forte, la silice mésoporeuse puis, après quelques minutes le précurseur de nitrate de sodium.

Dans un 2^{ième} bécher, on dissout le précurseur d'aluminium dans 5 mL d'eau distillée.

On ajoute les deux mélanges dans un 3^{ième} récipient. Il se produit une gélification instantanée. On ferme le récipient et on agite très fortement.

Ensuite, on place ce récipient à l'étuve à une température comprise entre environ 80°C et environ 90°C pendant une durée comprise entre 2 heures et un jour, de préférence un jour. On filtre (par exemple avec un papier-filtre à base de cellulose ou bien avec une centrifugeuse pour séparation solide-liquide) et on lave avec de l'eau distillée. On sèche le produit obtenu qui est une zéolithe de type nitrate-cancrinite. Le séchage peut être réalisé à l'étuve ou bien au moyen d'un tirage sous vide ou encore en combinant ces deux moyens, c'est-à-dire un séchage en température avec tirage sous vide.

La nitrate-cancrinite peut également être synthétisée à partir d'autres précurseurs tels que Al(NO₃)₃ , KNO₃ et KOH. En outre, la formule chimique finale peut contenir des ions potassium en substitution partielle ou totale des ions sodium. L'homme de métier saura modifier en conséquence les pourcentages massiques exprimés ci-dessus dans le cas de ladite nitrate-cancrinite synthétisée ci-dessus.

La synthèse d'une zéolithe, notamment d'une zéolithe de type nitrate-cancrinite, est parfaitement à la portée de l'homme du métier qui saura déterminer les quantités de précurseurs, d'eau distillée nécessaires à la synthèse, ainsi que les conditions de température, d'agitation et de durée de la synthèse en vue d'obtenir une zéolithe.

L'exemple de réalisation de synthèse d'une zéolithe de type nitrate-cancrinite qui a été détaillé ci-dessus est destiné à illustrer la présente demande de brevet et ne constitue en aucun cas une limitation de l'invention.

Une deuxième valorisation concerne la solution acide obtenue à l'issue du traitement acide.

A l'issue du traitement acide, de nombreux ions sont présents en grande quantité dans la solution acide. C'est pourquoi, à l'étape c), on peut valoriser la solution acide obtenue à l'issue de l'étape b) en extrayant ces ions soit simultanément ce qui conduira à l'obtention d'un mélange d'oxydes directement ré-exploitables par l'industrie cimentière par exemple, soit d'en isoler certains de façon sélective.

Ainsi, lorsqu'un traitement acide a été effectué, l'étape c) peut consister à extraire ou à isoler de manière sélective des ions présents dans la solution acide obtenue à l'issue du traitement acide.

Par neutralisation maîtrisée (à savoir par rajout d'une base telle que de la soude ou de la potasse sous contrôle du pH), il est possible de faire précipiter successivement les ions contenus dans la solution acide. On obtient alors successivement (par filtrations successives) des phases solides contenant les oxydes des ions présents en solution ; l'oxyde de calcium CaO étant le dernier oxyde à précipiter à un pH de 11. Le magnésium peut être également récupéré pour diverses applications telles que la métallurgie, l'aéronautique ou pour le domaine de l'énergie.

Cette valorisation de la solution acide obtenue après le traitement acide peut également être mise en œuvre dans le mode de réalisation de l'invention dans lequel on soumet ensuite la silice mésoporeuse à un traitement thermique tel que décrit ci-dessus.

Une troisième valorisation concerne la solution basique obtenue à l'issue du traitement basique.

La solution basique de silice dissoute obtenue après le traitement basique peut être utilisée pour la synthèse d'une zéolithe telle que détaillée ci-dessus, notamment une zéolithe de type nitrate-cancrinite. En effet, la solution basique peut être utilisée pour rendre le milieu de synthèse de la zéolithe très basique ; ce qui est essentiel pour la réussite de cette synthèse.

En outre, ladite solution basique contenant essentiellement de la silice dissoute, peut servir à la fabrication de matériaux de type silicate de calcium hydraté (connus également sous l'abréviation « CSH »). Ces matériaux sont particulièrement appropriés pour le piégeage d'ions polluants. Ainsi, on valorise la solution basique en l'utilisant pour la synthèse de silicate de calcium hydraté destinés au piégeage de polluants.

Ainsi, lorsqu'un traitement basique a été effectué, l'étape c) peut consister à utiliser la solution basique obtenue à l'issue du traitement basique pour la fabrication d'un matériau de type silicate de calcium hydraté et/ou pour la synthèse d'une zéolite.

Une quatrième valorisation concerne la silice obtenue à l'issue du traitement thermique.

Lorsque le déchet amianté contient du chrysotile et qu'il a été soumis à un traitement acide suivi d'un traitement thermique tels qu'ils ont été décrits ci-dessus, on obtient une silice dont les parois des nanotubes sont amorphes ou cristallisées et non hydratées. Cette silice peut être valorisée en l'utilisant comme moyen de stabilisation de phases dans des réactions chimiques. En effet, par effet de confinement des réactifs dans les nanotubes, les phases du milieu réactif sont stables. Cette stabilité de phases ne pourrait pas être obtenue dans des conditions normales de température et de pression. Cette propriété de stabilisation de phases peut trouver des applications dans le domaine de la microélectronique.

De plus, la taille des pores d'au moins 5 nm est particulièrement appropriée pour filtrer des molécules. Ainsi, la silice obtenue à l'issue du traitement thermique peut être utilisée en tant que moyen de dépollution en filtrant des molécules, par exemple des molécules pharmaceutiques.

Par ailleurs, comme cela a été mentionné ci-dessus, l'utilisation du chrysotile est très majoritaire puisqu'il représente environ 94% du marché mondial de l'amiante. C'est pourquoi, il est essentiel de disposer d'un procédé de destruction et de valorisation parfaitement approprié pour ce groupe minéralogique d'amiante.

Au cours de leurs investigations sur la destruction et la valorisation des déchets d'amiante, les inventeurs ont découvert de manière tout à fait surprenante qu'il était très avantageux d'effectuer un traitement thermique sur du chrysotile ayant été soumis à un traitement acide. En effet, cela permet d'obtenir une silice dont les parois des nanotubes sont amorphes ou cristallisées et non hydratées. Cela constitue une structure très intéressante pour de nombreuses applications de ce produit, et ce comme cela a été détaillé ci-dessus.

C'est pourquoi, la présente invention a pour autre objet un procédé de traitement d'un déchet contenant du chrysotile qui se caractérise en ce qu'il comprend au moins les étapes suivantes :
a) on dispose d'un déchet contenant du chrysotile ;
b) on réalise un traitement acide sur ledit déchet de manière à obtenir une silice mésoporeuse, ledit traitement acide consistant en l'immersion du déchet de chrysotile dans une solution d'acide fort à une température d'au plus 100°C ;
c) on réalise un traitement thermique consistant en un chauffage de la silice mésoporeuse à une température d'au moins 600°C.

A l'issue du traitement thermique, on obtient une silice présentant des nanotubes dont les parois sont amorphes ou cristallisées et non hydratées.

Le traitement acide de l'étape b) peut être réalisé de la même manière que celui du procédé de destruction et de valorisation d'un déchet amianté qui a été détaillé ci-dessus.

Le traitement thermique de l'étape c) peut être réalisé de la même manière que celui du procédé de destruction et de valorisation d'un déchet amianté qui a été détaillé ci-dessus.

Ainsi, au cours du traitement thermique, il y a une réorganisation de la matière de silice ou en d'autres termes un réarrangement qui provoque une cristallisation des parois des nanotubes et une perte de la porosité de la paroi des nanotubes par leur condensation.

La silice obtenue à l'issue de l'étape c) peut être valorisée de différentes manières comme cela a été décrit ci-dessus. Elle peut être notamment utilisée en tant que moyen de stabilisation de phases dans des réactions chimiques ou bien en tant que moyen de filtration.

L'invention sera bien comprise à l'aide de la description détaillée qui suit, en référence, au dessin annexé en représentant, à titre d'exemple non limitatif, les résultats expérimentaux obtenus à partir de trois déchets amiantés et d'un déchet de chrysotile :
- la figure 1 représente les diffractogrammes de rayons X des trois déchets amiantés ;
- la figure 2 représente les diffractogrammes de rayons X des solides récupérés à l'issue du traitement acide des trois déchets amiantés ;
- la figure 3 représente le diffractogramme de rayons X de la nitrate-cancrinite obtenue à partir d'un des déchets amiantés ;
- la figure 4 représente les diffractogrammes de rayons X d'un déchet de chrysotile avant et après traitement acide ;
- la figure 5 représente l'analyse thermogravimétrique de la silice mésoporeuse hydratée obtenue après traitement acide ;
- la figure 6 représente les diffractogrammes de rayons X de la silice mésoporeuse après traitement thermique à différentes températures.

### PARTIE EXPERIMENTALE

### I - Expérimentations sur des déchets cimentaires amiantés :

Dans une 1^{ière} série d'expérimentations, le procédé de destruction et de valorisation selon l'invention qui a été décrit ci-dessus a été mis en œuvre sur les trois déchets cimentaires amiantés suivants :
- le 1^{ier} déchet cimentaire amianté était une tuile de toit ;
- le 2^{ième} déchet cimentaire amianté était un joint de tuyau.
- le 3^{ième} déchet amianté était un échantillon de flocage comprenant un mélange de gypse, d'amiante et de fibres de silicates alcalino terreux.

Tout d'abord, afin de déterminer le ou les groupes minéralogiques qu'ils contenaient, ces trois déchets ont été analysés par diffractométrie de rayons X avec un diffractomètre commercialisé par la société BRUCKER sous la dénomination commerciale « D2 PHASER » en utilisant le rayonnement de la raie Kα du cuivre (λ= 1.54Å) après filtration par un filtre de nickel. Le pas de mesure était de 0.014° en 2θ.

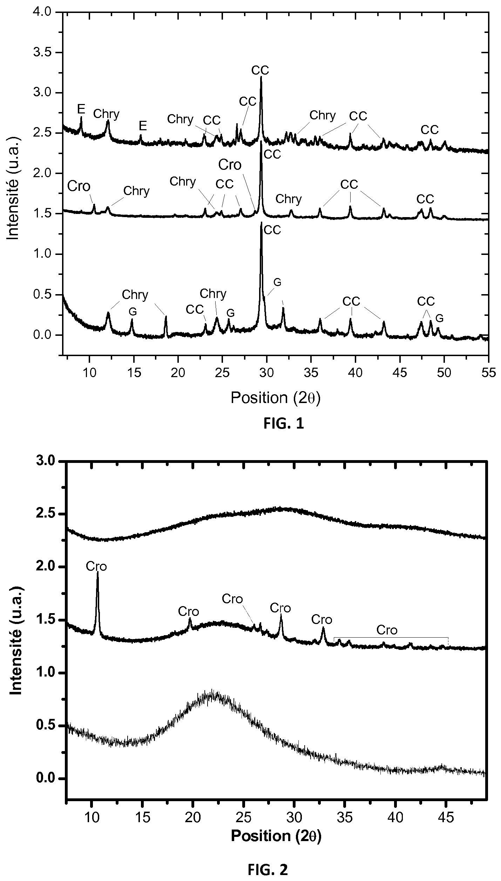

La figure 1 représente les diffractogrammes du 1^{ier}, du 2^{ième}et du 3^{ème} déchet.

Le diffractogramme supérieur est celui du 1^{ier} déchet, le diffractogramme intermédiaire est celui du 2^{ième} déchet et le diffractrogramme inférieur est celui du 3^{ième} déchet.

Sur ces trois diffractogrammes, les pics de diffraction caractéristiques du chrysotile, de la crocidolite, du carbonate de calcium (CaCO₃), de la matrice cimentaire (ettringite de formule Ca₆Al₂(SO₄)₃(OH)₁₂,26H₂O) et du gypse sont signalés respectivement par les annotations : « Chry », « Cro », « CC », « E » et « G ».

Concernant la présence d'amiante, le diffractrogramme du 1^{ier} déchet présente seulement les pics caractéristiques du chrysotile (notamment à 12,05° et à 24,30° en 2θ), le diffractogramme du 2^{ième} déchet présente les pics caractéristiques du chrysotile et de la crocidolite (notamment à 28,76°) et le diffractogramme du 3^{ème} déchet ne présente que les pics du chrysotile.

Les trois déchets ont également été analysés par microscopie électronique à balayage en utilisant un microscope électronique de type FEI Quanta 200 FEG équipé d'un détecteur d'électrons secondaires sous vide. La tension d'accélération était de 15kV. Cette analyse a été couplée avec une analyse dispersive en énergie (EDS) pour l'identification chimique des différentes phases.

Ces analyses ont permis de déterminer que :
- le 1^{ier} déchet (tuile de toit) contenait uniquement du chrysotile ;
- le 2^{ième} déchet (joint de tuyau) contenait un mélange de chrysotile et d'une amphibole : la crocidolite ;
- le 3^{ième} déchet contenait du chrysotile et des fibres de silicates alcalino terreux amorphes, non cristallisées.

Du fait que les trois déchets contenaient du chrysotile, ils ont été soumis à un traitement acide qui a consisté à les immerger dans un réacteur de 1 L qui contenait une solution d'acide nitrique à une concentration de 4 mol/L et à maintenir le milieu réactionnel ainsi obtenu sous agitation à une température de 80°C pendant une durée de 7 jours.

Le traitement en milieu acide a permis de réduire de 90% la masse des trois déchets cimentaires amiantés.

Une analyse chimique par spectrométrie de fluorescence X du solide et de la solution acide recueillis après le traitement acide a permis de réaliser le bilan de matière qui est détaillé dans le tableau 1 ci-dessous :

**Tableau 1 : Bilan de matière : évolution des compositions chimiques avant et après traitement en milieu acide**

| **Echantillons** | **%Mg** | **%Al** | **%Si** | **%Ca** | **%Fe** |
|---|---|---|---|---|---|
| 1^{ier} déchet | 15 | 8 | 34 | 37 | 5 |
| Solution acide | 2 | 22 | 0 | 65 | 12 |
| Solide restant | 0 | 0 | >98 | 0 | 0 |
| 2^{ième} déchet | 10 | 6 | 25 | 52 | 8 |
| Solution acide | 1 | 18 | 0 | 68 | 13 |
| Solide restant | 1 | 0 | 93 | 0 | 6 |
| 3^{ième} déchet | 4 | 7 | 15 | 69 | 5 |
| Solution acide | 7 | 10 | 0 | 79 | 4 |
| Solide restant | 0 | 0 | >99 | 0 | 0 |

L'analyse chimique par spectrométrie de fluorescence X a été réalisée en utilisant un spectrophotomètre commercialisé par la société PANalytical sous la dénomination commerciale « Epsilon 3^{X}» et qui était équipé avec un tube en argent (sous 30kV et 3mA) et différents filtres (Ag, Al and Ti).

Au vu des résultats détaillés dans le tableau 1, on relève que les solutions acides à l'issue du traitement acide contiennent du calcium, du fer, du magnésium et de l'aluminium. La matrice cimentaire a été dissoute. Du déchet avant traitement, le silicium est le seul élément qui n'a pas été dissout. Il est présent dans le solide restant à l'issue du traitement acide.

De plus, l'analyse chimique du 1^{ier} déchet (tuile de toit) après traitement acide montre que la matrice cimentaire a été dissoute et que le chrysotile a été transformé.

En ce qui concerne le 2^{ième} déchet (joint de tuyau), la composition chimique de la solution après traitement acide est similaire à celle obtenue après ce traitement sur le 1^{ier} déchet, mais dans le solide, il demeure du fer et du magnésium qui indiquent que l'amphibole (crocidolite) n'a pas été dissoute par le traitement acide.

Pour le 3^{ième} déchet (flocage), la composition chimique du solide restant montre que la matrice gypse, ainsi que les fibres de silicates alcalino-terreux amorphes ont été dissoutes et que le chrysotile a été transformé en silice pure.

Les solides des trois déchets récupérés à l'issue du traitement acide ont été soumis à une analyse de diffractométrie de rayons X.

La figure 2 représente les diffractogrammes des solides récupérés à l'issue du traitement acide du 1^{ier}, du 2^{ième} déchet et du 3^{ème} déchet.

Le diffractogramme supérieur est celui du solide du 1^{ier} déchet, le diffractrogramme intermédiaire est celui du solide 2^{ième} déchet et le diffractrogramme inférieur est celui du solide 3^{ième} déchet.

Sur le 2^{ième} diffractogramme, les pics de diffraction caractéristiques de la crocidolite sont signalés par l'annotation : « Cro ».

Au vu des diffractogrammes représentés sur la figure 2, on relève :
- l'absence de pic caractéristique du chrysotile sur les trois diffractrogrammes des solides issus des trois déchets ;
- la présence des pics caractéristiques de la crocidolite sur le diffractrogramme du solide du 2^{ième} déchet.

Cela montre que le traitement acide élimine le chrysotile mais pas l'amphibole dans un déchet amianté.

La solution résultante du traitement acide contient principalement les ions Fe³⁺, Mg²⁺, Al³⁺ et Ca²⁺. Ces ions peuvent être précipités sélectivement par ajout de soude (NaOH) ou de potasse (KOH) selon des séquences successives de précipitation/filtration aux pH de valeurs suivantes : 1,2±0.3 ; 3±0,3 ; 10,4±0,3 et 12,4±0,3 pour récupérer respectivement les ions Fe³⁺, Al³⁺, Mg²⁺ et Ca²⁺ sous forme d'hydroxydes Fe(OH)₃, Al(OH)₃, Mg(OH)₂ et Ca(OH)₂. Après avoir récupéré les ions cités précédemment, la solution finale contient soit du nitrate de sodium (NaNO₃) dans le cas d'une neutralisation à la soude (ce nitrate peut être utilisé pour la synthèse de la nitrate-cancrinite), soit du nitrate de potassium (KNO₃) dans le cas d'une neutralisation à la potasse (ce nitrate peut être exploitable en agriculture).

Comme expliqué ci-dessus, la structure du chrysotile a été détruite par dissolution de la couche de brucite, Mg(OH)₂. La dissolution de la couche de brucite est due à la structure du chrysotile qui rend accessible cette couche à un solvant acide. Cependant, le traitement acide ne détruit pas l'amphibole du fait de sa structure : la couche soluble d'octaèdre MO₆ est confinée entre deux couches de SiO₂ qui sont insolubles dans une solution acide.

Un traitement basique consistant en l'immersion du solide du 2^{ième} déchet (récupéré à l'issue du traitement acide) dans une solution de NaOH à une concentration de 10 mol/L et chauffée à une température de 180°C dans un autoclave de 50 mL a été effectué pendant une durée de 5 jours.

En outre, ce même traitement basique a été appliqué à des échantillons de crocidolite et amosite pures.

Tous les solides soumis à ce traitement basique ont été entièrement dissous et l'on a obtenu des solutions basiques qui ont été analysées par spectrométrie de fluorescence X.

Le tableau 2 détaille les analyses chimiques par spectrométrie de fluorescence X des solutions résiduelles après le traitement basique.

**Tableau 2 : Analyses spectrométrie de fluorescence X des solutions après le traitement basique**

| **Echantillons** | **Na** | **Mg** | **Si** | **Fe** |
|---|---|---|---|---|
| Solution de la crocidolite | 82% | 1% | 15% | 1% |
| Solution de l'amosite | 83% | 0% | 16% | 1% |
| Solution du 2^{ième} déchet | 81% | 0% | 18% | 1% |

Au vu du tableau 2, on relève que la composition des solutions de dissolution des amphiboles pures (crocidolite et amosite) est similaire à la composition de la solution obtenue après dissolution du solide du 2^{ième} déchet témoignant ainsi de sa totale destruction. Le silicium est présent dans les solutions basiques obtenues à l'issue du traitement basique. Ces résultats démontrent que le traitement basique détruit complètement les amiantes du groupe des amphiboles.

Par ailleurs, la silice mésoporeuse obtenue à l'issue du traitement acide appliqué sur le 1^{ier} déchet (c'est-à-dire la tuile) a été récupérée par filtration et utilisée pour la synthèse d'une zéolithe de type nitrate-cancrinite.

Cette zéolithe a été synthétisée de la manière suivante :
On disposait des précurseurs suivants :
- précurseur de silicium : 3,09 g de la silice mésoporeuse obtenue à l'issue du traitement acide sur le 1^{ier} déchet ;
- précurseur d'aluminium : 1,64 g de Al₂O₃.Na₂O ;
- précurseur de nitrate de sodium : 29,01 g de NaNO₃ ;
- 4,36 g de NaOH.

Dans un 1^{ier} bécher rempli de 35 mL d'eau distillée, on a ajouté dans l'ordre suivant : NaOH, la silice mésoporeuse puis, après quelques minutes NaNO₃.

Dans un 2^{ième} bécher, on a dissous Al₂O₃.Na₂O dans 5 mL d'eau distillée.

On a ajouté les deux mélanges dans un 3^{ième} récipient. Il s'est produit une gélification instantanée. On a fermé le récipient et agité très fortement.

Ensuite, on a placé ce récipient à l'étuve à une température de 90°C pendant un jour. On a filtré avec un papier-filtre à base de cellulose et on a lavé avec de l'eau distillée. On a séché le produit ainsi obtenu qui était une zéolithe de type nitrate-cancrinite.

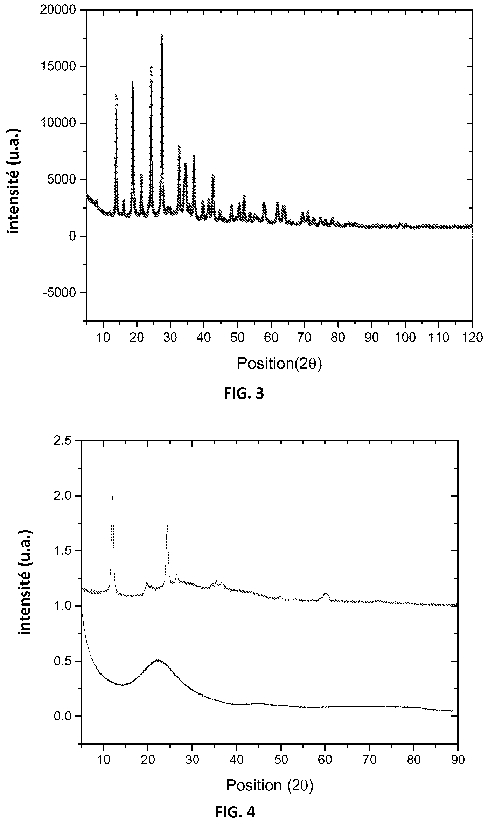

En effet, son diffractrogramme par rayons X est représenté sur la figure 3, ainsi que celui du modèle structural de la nitrate-cancrinite (c'est-à-dire le diffractrogramme « théorique » ou autrement dit « calculé »). On relève que les deux diffractrogrammes sont quasi-superposés. Cela est confirmé par le fait qu'on a un facteur X² de 5,3 qui est une excellente valeur en cristallographie. Ainsi, la figure 3 témoigne de l'excellente pureté du produit ainsi synthétisé avec un très bon accord avec le modèle structural.

### II - Expérimentations de traitement d'un déchet de chrysotile :

Dans une 2^{ième} série d'expérimentations, on a traité un déchet de chrysotile pur en le soumettant tout d'abord à un traitement acide par immersion dans une solution d'acide nitrique de concentration 4 mol/L pendant 7 jours à 80°C.

La figure 4 représente les diffractogrammes de rayons X :
- du déchet de chrysotile avant traitement acide (diffractrogramme supérieur) ;
- du déchet de chrysotile après traitement acide (diffractrogramme inférieur).

On relève sur le diffractrogramme supérieur les pics de diffraction caractéristiques du chrysotile qui sont absents sur la diffractogramme inférieur qui présente un large pic de diffusion caractéristique d'un composé amorphe.

Ainsi, à l'issue du traitement acide sur le chrysotile, on obtient une silice mésoporeuse qui est une silice amorphe (c'est-à-dire non cristallisée). La structure cristalline du chrysotile a disparu à l'issue de ce traitement.

Une analyse de la porosité a été effectuée sur la silice ainsi obtenue :
- surface spécifique : 455 m²/g ;
- volume de pore : 0,37 cm³/g ;
- diamètre de pore : 3,2 nm.

Ensuite, la silice mésoporeuse a été séparée de la solution acide par filtration et soumise à un traitement thermique.

Le traitement thermique a consisté à soumettre la silice mésoporeuse aux températures suivantes : 200°C, 600°C, 700°C et 800°C.

Une analyse thermogravimétrique a été effectuée avec un équipement de type Netzsch STA449F de 25°C à 1400°C avec une vitesse de chauffage de 5°C/min sous flux d'argon.

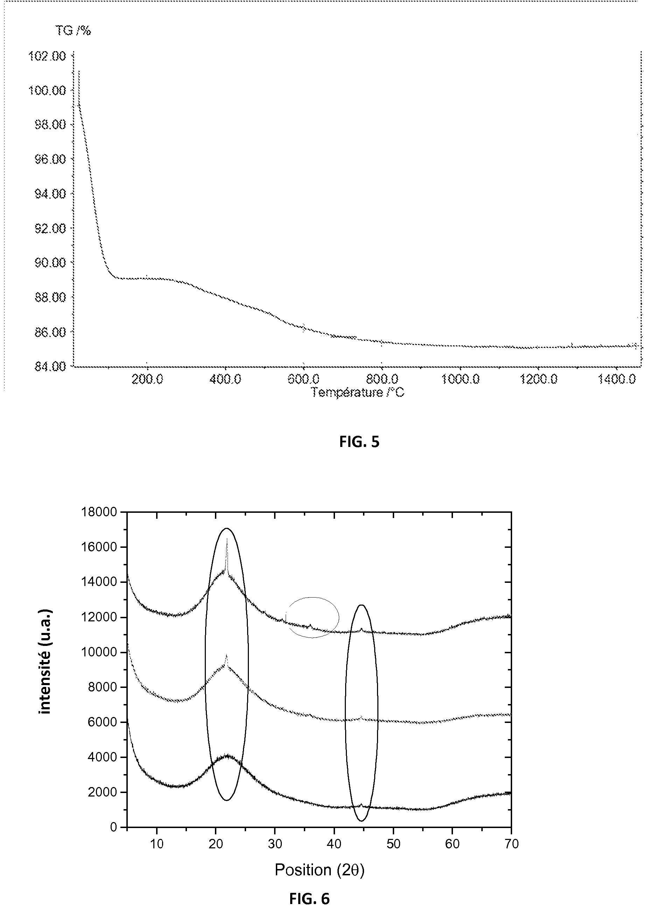

La figure 5 représente l'enregistrement de l'analyse thermogravimétrique. On note une perte de masse brutale jusqu'à 100°C qui correspond à l'élimination de l'eau « libre». La perte de masse entre 100°C et 600°C correspond à la perte de l'eau « liée » à la charpente siliceuse des nanotubes. Cette perte d'eau s'accompagne d'un réarrangement progressif des tétraèdres de SiO₄ entre eux. Ce réarrangement provoque une cristallisation des parois des nanotubes à partir de 700°C et une perte de la porosité des parois par leur condensation.

La figure 6 représente les diffractogrammes de rayons X de la silice mésoporeuse après traitement thermique à :
- 600°C (diffractogramme inférieur) ;
- 700°C (diffractogramme intermédiaire) ;
- 800°C (diffractogramme supérieur).

On relève qu'à 600°C, la silice est toujours amorphe (il n'y a pas de pic de diffraction). A partir de 700°C, des pics de cristallisation d'une phase cristallisée de la silice de type cristobalite commencent à apparaître.

Le tableau 3 ci-dessous détaille la surface spécifique, la taille des pores et le volume de pore de la silice mésoporeuse avant traitement thermique, puis après traitement thermique à 200°C, 600°C et 800°C. Chacun des traitements thermiques ont été effectués dans un four commercialisé par la société CARBOLITE GERO sous la dénomination commerciale « CWF », et ce pendant 10 heures.

**Tableau 3 : surface spécifique, taille des pores et volume de pore de la silice avant et après traitement thermique**

| | Surface spécifique (m²/g) | Taille des pores (nm) | Volume de pore (cm³/g) |
|---|---|---|---|
| Après traitement acide | 455 | 3,23 | 0,37 |
| Après traitement thermique à 200°C | 418 | 3,5 | 0,37 |
| Après traitement thermique à 600°C | 208 | 5,2 | 0,27 |
| Après traitement thermique à 800°C | 174 | 5,3 | 0,21 |

Au vu du tableau 3, on constate que le volume des pores et la surface spécifique diminuent alors que le diamètre des pores augmente avec la température de traitement.

Ces résultats témoignent que les parois des nanotubes de silice se reconstruisent en se condensant comme cela a été expliqué ci-dessus. En effet, lors du traitement acide, on élimine les couches de brucite ; ce qui laisse des espaces très importants entre les feuillets de silice qui constituent la paroi des tubes. Les tubes ont un diamètre de 3,2nm mais avec des parois très peu structurées et donc une surface spécifique importante (surface développée par des feuillets non contigus) et un volume de pore important. Lorsqu'on augmente la température, ces feuillets se reconnectent entre eux avec la formation des tétraèdres de SiO₄ ; ce qui entraîne une diminution de la surface spécifique, le volume total diminue également et le centre du tube (diamètre du tube) augmente.

## Revendications

1. Procédé de destruction et de valorisation d'un déchet amianté, **caractérisé en ce qu'**il comprend au moins les étapes suivantes :
a) on détermine le ou les groupes minéralogique(s) d'amiante que contient ledit déchet, ledit groupe étant choisi parmi le chrysotile et l'amphibole,
b) on effectue au moins un traitement sur ledit déchet amianté, ledit traitement étant :
- un traitement acide lorsque le déchet amianté comprend uniquement du chrysotile, ledit traitement acide consistant en l'immersion du déchet amianté dans une solution d'acide fort, à une température d'au plus 100°C, de manière à obtenir une solution acide et un solide comprenant une silice mésoporeuse,
- un traitement basique lorsque le déchet amianté comprend uniquement de l'amphibole, ledit traitement basique consistant en l'immersion du déchet amianté dans une solution d'une base forte dans un milieu fermé hermétiquement de manière à obtenir une solution basique contenant de la silice dissoute,
- ledit traitement acide suivi dudit traitement basique lorsque le déchet amianté comprend un mélange de chrysotile et d'amphibole, de manière à obtenir après ledit traitement acide une solution acide et un mélange solide contenant une silice mésoporeuse et l'amphibole non altérée, ledit mélange solide étant séparé de la solution acide pour être soumis audit traitement basique de manière à obtenir une solution basique contenant de la silice dissoute,
c) on valorise au moins un des produits obtenus à l'issue de l'étape b) de traitement.

2. Procédé de destruction et de valorisation selon la revendication 1, **caractérisé en ce que** le déchet amianté est un déchet cimentaire amianté ou un flocage amianté à base de gypse.

3. Procédé de destruction et de valorisation selon la revendication 1 ou 2, **caractérisé en ce que** le traitement acide est suivi d'un traitement thermique consistant en un chauffage de la silice mésoporeuse à une température d'au moins 600°C.

4. Procédé de destruction et de valorisation selon la revendication 1 ou 2, **caractérisé en ce que** lorsqu'un traitement acide a été effectué, l'étape c) consiste à utiliser la silice mésoporeuse pour le piégeage ou la filtration de molécules et/ou en tant que précurseur de silicium pour la synthèse d'une zéolithe.

5. Procédé de destruction et de valorisation selon la revendication 4, **caractérisé en ce que** lorsque la solution d'acide est une solution d'acide nitrique, la silice mésoporeuse est utilisée pour synthétiser une zéolithe de type nitrate-cancrinite de formule Na₈[Al₆Si₆O₂₄](NO₃)₂-4H₂O.

6. Procédé de destruction et de valorisation selon l'une quelconque des revendications 1 à 5, **caractérisé en ce que** lorsqu'un traitement acide a été effectué, l'étape c) consiste à extraire ou à isoler de manière sélective des ions présents dans la solution acide obtenue à l'issue du traitement acide.

7. Procédé de destruction et de valorisation selon l'une quelconque des revendications 1 à 2, **caractérisé en ce que** lorsqu'un traitement basique a été effectué, l'étape c) consiste à utiliser la solution basique obtenue à l'issue du traitement basique pour la fabrication d'un matériau de type silicate de calcium hydraté et/ou pour la synthèse d'une zéolite.

8. Procédé de destruction et de valorisation selon l'une quelconque des revendications 1 à 6, **caractérisé en ce que** la solution acide contient au moins un monoacide fort choisi parmi l'acide nitrique et l'acide chlorhydrique.

9. Procédé de destruction et de valorisation selon l'une quelconque des revendications 1 à 2 et 7, **caractérisé en ce que** la base forte de la solution basique est choisie parmi la soude et la potasse.

10. Procédé de traitement d'un déchet contenant du chrysotile, **caractérisé en ce qu'**il comprend au moins les étapes suivantes :
a) on dispose d'un déchet contenant du chrysotile ;
b) on réalise un traitement acide sur ledit déchet de manière à obtenir une silice mésoporeuse, ledit traitement acide consistant en l'immersion du déchet de chrysotile dans une solution d'acide fort à une température d'au plus 100°C ;
c) on réalise un traitement thermique consistant en un chauffage de la silice mésoporeuse à une température d'au moins 600°C.

## Patentansprüche

1. Zerstörungs- und Verwertungsverfahren eines Asbestabfalls, **dadurch gekennzeichnet, dass** es mindestens die folgenden Schritte umfasst:
a) Bestimmen der mineralogische(n) Gruppe(n) von Asbest, die der Abfall enthält, wobei die Gruppe aus Chrysotil und Amphibol ausgewählt wird,
b) Durchführen mindestens einer Behandlung des Asbestabfalls, wobei die Behandlung folgende ist:
- eine Säurebehandlung, wenn der Asbestabfall nur Chrysotil umfasst, wobei die Säurebehandlung darin besteht, den Asbestabfall bei einer Temperatur von höchstens 100 °C in eine starke Säurelösung einzutauchen, um eine saure Lösung und einen Feststoff zu erhalten, der eine mesoporöse Kieselsäure umfasst,
- eine Basisbehandlung, wenn der Asbestabfall nur Amphibol umfasst, wobei die Basisbehandlung darin besteht, den Asbestabfall in eine Lösung mit einer starken Basis in einem hermetisch geschlossenen Medium einzutauchen, um eine Basislösung zu erhalten, die gelöste Kieselsäure enthält,
- die Säurebehandlung, gefolgt von der Basisbehandlung, wenn der Asbestabfall eine Mischung aus Chrysotil und Amphibol umfasst, um nach der Säurebehandlung eine saure Lösung und eine feste Mischung zu erhalten, die eine mesoporöse Kieselsäure und das unveränderte Amphibol enthält, wobei die feste Mischung von der Säurelösung getrennt ist, um dieser Basisbehandlung unterzogen zu werden, um eine Basislösung zu erhalten, die gelöste Kieselsäure enthält,
c) mindestens eines der nach dem Verarbeitungsschritt b) erhaltenen Produkte verwertet wird.

2. Zerstörungs- und Verwertungsverfahren nach Anspruch 1, **dadurch gekennzeichnet, dass** der Asbestabfall ein Asbestzementabfall oder eine Asbestflockung auf Gipsbasis ist.

3. Zerstörungs- und Verwertungsverfahren nach Anspruch 1 oder 2, **dadurch gekennzeichnet, dass** auf die Säurebehandlung eine Wärmebehandlung durch Erhitzen der mesoporösen Kieselsäure auf eine Temperatur von mindestens 600 °C folgt.

4. Zerstörungs- und Verwertungsverfahren nach Anspruch 1 oder 2, **dadurch gekennzeichnet, dass**, wenn eine Säurebehandlung durchgeführt wurde, Schritt c) darin besteht, mesoporöse Kieselsäure zum Einfangen oder Filtrieren von Molekülen und/oder als Siliziumvorstufe für die Synthese eines Zeoliths zu verwenden.

5. Zerstörungs- und Verwertungsverfahren nach Anspruch 4, **dadurch gekennzeichnet, dass**, wenn die Säurelösung eine Salpetersäurelösung ist, mesoporöse Kieselsäure zur Synthese eines Zeoliths vom Typ Nitrat-Cankrinit der Formel Na₈[Al₆Si₆O₂₄](NO₃)₂-4H₂O verwendet wird.

6. Zerstörungs- und Verwertungsverfahren nach einem der Ansprüche 1 bis 5, **dadurch gekennzeichnet, dass**, wenn eine Säurebehandlung durchgeführt wurde, Schritt c) darin besteht, Ionen, die in der nach der Säurebehandlung erhaltenen Säurelösung vorhanden sind, selektiv zu extrahieren oder zu isolieren.

7. Zerstörungs- und Verwertungsverfahren nach einem der Ansprüche 1 bis 2, **dadurch gekennzeichnet, dass** der Schritt c) darin besteht, wenn eine Basisbehandlung durchgeführt wurde, die aus der Basisbehandlung gewonnene Basislösung zu der Herstellung eines hydratisierten Kalziumsilikatmaterials und/oder zur Synthese eines Zeoliths zu verwenden.

8. Zerstörungs- und Verwertungsverfahren nach einem der Ansprüche 1 bis 6, **dadurch gekennzeichnet, dass** die Säurelösung mindestens eine starke Monosäure enthält, die aus Salpetersäure und Salzsäure ausgewählt ist.

9. Zerstörungs- und Verwertungsverfahren nach einem der Ansprüche 1 bis 2 und 7, **dadurch gekennzeichnet, dass** die starke Basis der Basislösung aus Natronlauge und Kaliumdioxid ausgewählt ist.

10. Verfahren zur Behandlung eines chrysotilhaltigen Abfalls, **dadurch gekennzeichnet, dass** es mindestens die folgenden Schritte umfasst:
a) ein chrysotilhaltiger Abfall vorliegt;
b) eine Säurebehandlung des Abfalls durchgeführt wird, um eine mesoporöse Kieselsäure zu erhalten, wobei die Säurebehandlung darin besteht, den Chrysotilabfall bei einer Temperatur von höchstens 100 °C in eine starke Säurelösung einzutauchen;
c) eine Wärmebehandlung durch Erhitzen der mesoporösen Kieselsäure auf eine Temperatur von mindestens 600 °C durchgeführt wird.

## Claims

1. A method for destructing and valorizing an asbestos waste, **characterized in that** it comprises at least the following steps of:
a) determining the asbestos mineralogical group(s) contained in said waste, said group being selected from a chrysotile and an amphibole,
b) performing at least one treatment on said asbestos waste, said treatment being:
- an acid treatment when the asbestos waste comprises only a chrysotile, said acid treatment consisting in the immersion of the asbestos waste in a strong acid solution, at a temperature of at most 100°C, so as to obtain an acid solution and a solid comprising a mesoporous silica,
- a base treatment when the asbestos waste comprises only an amphibole, said base treatment consisting in the immersion of the asbestos waste in a solution of a strong base in a hermetically sealed medium so as to obtain a base solution containing dissolved silica,
- said acid treatment followed by said base treatment when the asbestos waste comprises a mixture of a chrysotile and an amphibole, so as to obtain after said acid treatment an acid solution and a solid mixture containing a mesoporous silica and the unaltered amphibole, said solid mixture being separated from the acid solution to be subjected to said base treatment so as to obtain a base solution containing dissolved silica,
c) valorizing at least one of the products obtained on completion of step b) of the treatment.

2. The destruction and valorization method according to claim 1, **characterized in that** the asbestos waste is an asbestos cement waste or a gypsum-based asbestos flocking.

3. The destruction and valorization method according to claim 1 or 2, **characterized in that** the acid treatment is followed by a thermal treatment consisting in a heating of the mesoporous silica at a temperature of at least 600°C.

4. The destruction and valorization method according to claim 1 or 2, **characterized in that** when an acid treatment has been performed, step c) consists in using the mesoporous silica for the entrapment or the filtering of molecules and/or as a silicon precursor for the synthesis of a zeolite.

5. The destruction and valorization method according to claim 4, **characterized in that** when the acid solution is a nitric acid solution, the mesoporous silica is used to synthesize a nitrate-cancrinite type zeolite of formula Na₈[Al₆Si₆O₂₄](NO₃)₂-4H₂O.

6. The destruction and valorization method according to any one of claims 1 to 5, **characterized in that** when an acid treatment has been performed, step c) consists in selectively extracting or isolating ions present in the acid solution obtained on completion of the acid treatment.

7. The destruction and valorization method according to any one of claims 1 to 2, **characterized in that** when a base treatment has been performed, step c) consists in using the base solution obtained on completion of the base treatment for the production of a hydrated calcium silicate type material and/or for the synthesis of a zeolite.

8. The destruction and valorization method according to any one of claims 1 to 6, **characterized in that** the acid solution contains at least one strong monoacid selected from nitric acid and hydrochloric acid.

9. The destruction and valorization method according to any one of claims 1 to 2 and 7, **characterized in that** the strong base of the base solution is selected from soda and potash.

10. A method for treating a waste containing a chrysotile, **characterized in that** it comprises at least the following steps of:
a) providing a waste containing a chrysotile;
b) carrying out an acid treatment on said waste so as to obtain a mesoporous silica, said acid treatment consisting in the immersion of the chrysotile waste in a strong acid solution at a temperature of at most 100°C;
c) carrying out a thermal treatment consisting in a heating of the mesoporous silica at a temperature of at least 600°C.
